# EUROPÄISCHE PATENTSCHRIFT

(11) **EP 2 848 498 B1**
(45) Veröffentlichungstag und Bekanntmachung des Hinweises auf die Patenterteilung: **08.11.2017**
(21) Anmeldenummer: 14183113.1
(22) Anmeldetag: 02.09.2014
(51) Int. Cl.: B62D 13/00, B62D 53/00, B62D 1/28, B60T 8/17, B62D 15/02

(54) **Routenzug und zugehöriges Steuerungsverfahren**
Route train and control method for same
Chariot tracteur et son procédé de commande

(30) Priorität: 17.09.2013 DE 102013015322; 06.11.2013 DE 102013112209
(43) Veröffentlichungstag der Anmeldung: 18.03.2015
(73) Patentinhaber: STILL GmbH, 22113 Hamburg (DE)
(72) Erfinder: Wittmann, Thomas, 21035 Hamburg (DE); Viereck, Volker, 23898 Kühsen (DE); Krüger-Basjmeleh, Tino, 25469 Halstenbek (DE)
(74) Vertreter: Patentship Patentanwaltsgesellschaft mbH

(56) Entgegenhaltungen:
- DE-A1- 10 108 382
- DE-A1-102011 085 019
- DE-U1-202012 002 489
- JP-A- 2001 334 966

## Beschreibung

Die Erfindung betrifft einen Routenzug. Insbesondere betrifft die Erfindung einen Routenzug bestehend aus einem Schlepper und mindestens einem Anhänger als Fahrzeuge des Routenzuges, wobei mindestens ein Fahrzeug des Routenzuges mindestens einen optischen Sensor aufweist und der Erfassungsbereich des optischen Sensors so ausgerichtet ist, dass er mindestens einen Teilbereich des Routenzuges sowie der Umgebung erfasst, sowie ein zugehöriges Steuerungsverfahren für einen solchen Routenzug.

Moderne Produktionsabläufe machen zunehmend flexiblere Materialflusskonzepte erforderlich. Für die zeit- und platzsparende Versorgung von Arbeitsplätzen in der Produktion mit Fertigungsteilen, Zuliefererkomponenten und Halbzeugen werden häufig Routenzugsysteme eingesetzt. Diese Routenzüge, die auch als Schlepperzug bezeichnet werden, bestehen dabei aus einem Schleppfahrzeug bzw. Schlepper und mindestens einem Anhänger, jedoch im Regelfall mehreren Anhängern. Die Anhänger weisen üblicherweise eine Anhängerdeichsel auf, mit der sie in eine Kupplung des vorauslaufenden Fahrzeuges eingehängt sind.

Zurzeit werden Routenzüge überwiegend manuell gefahren d.h. eine Bedienperson auf dem Schlepper fährt den Routenzug. Es wird jedoch angestrebt, die Routenzüge möglichst weitgehend automatisiert zu betreiben. Für solche fahrerlosen Transportsysteme bestehen besondere Anforderungen an die Sicherheit im Anhängerbetrieb. So bestehen etwa Einschränkungen als Sicherheitsanforderungen in Bezug auf Personen, die sich beim Anfahren des Routenzuges zwischen Anhängern im Bereich der Anhängerdeichsel bzw. einer Zugdeichsel befinden könnten. Es muss ein akustisches Warnsignal gegeben werden und die Geschwindigkeit des Routenzuges darf nach dem Anfahren für eine Mindestzeitdauer von mehreren Sekunden eine bestimmte Maximalgeschwindigkeit, beispielsweise 0,3 m/s nicht überschreiten. Auch müssen für den Routenzug breite Fahrspuren vorhanden sein.

Nachteilig an diesem Stand der Technik ist, dass sich eine geringe Flexibilität und Leistungsfähigkeit in Hinblick auf einige Aspekte ergibt. So können Kollisionen von Anhängern nicht vermieden werden oder auch schon nicht erkannt werden. Auch ist die Anzahl der Anhänger des Routenzuges in einer Steuerung eines autonom fahrenden Schleppers nicht bekannt. Die Position der Anhänger hinter dem Schlepper ist nicht bekannt und daher kann das Fahrverhalten nicht hierauf abgestimmt werden. Die Position der Anhänger kann konsequenterweise auch nicht an Drittfahrzeuge übermittelt werden, die genaue Informationen über die Position der Anhänger benötigen, wenn diese zum Beispiel mit den Anhängern zusammenwirken sollen wie beim Entladen eines Anhängers. Insbesondere wenn diese Drittfahrzeuge ebenfalls autonom betrieben werden sollen, ergeben sich hieraus Schwierigkeiten.

Die Absicherung von Personen, die zwischen den Anhängern oder dem ersten Anhänger und dem Schlepper in den Zwischenräumen zwischen den Fahrzeugen stehen, beruht letztlich darauf, dass die Person den Gefahrenbereich bei einem Anfahren des Routenzuges eigenständig verlässt, da ein Warnsignal erfolgt und das Anfahren so langsam erfolgt, dass ein Verlassen des Gefahrenbereichs möglich ist. Hieraus ergeben sich verbleibende Gefahrenmomente, da die Person nicht automatisiert erkannt wird und eine automatische Reaktion des Systems nicht möglich ist.

Auch erfordert das Anfahren von Stationen zur Übergabe von transportierten Ladungen die Vorgabe genau definierter Wege sowie geringer Toleranzen bei der Spurtreue der Anhänger sowie die genaue Vorgabe von Haltepunkten. Abweichungen können hier nicht gehandhabt werden und führen zu einer Fehlfunktion. Ebenso ist es nach dem Stand der Technik nicht möglich, bei unerwarteten Hindernissen, die sich teilweise in einem Fahrweg des Routenzuges, insbesondere seitlich im Fahrweg bei einer Kurvenfahrt befinden, zu beurteilen, ob dieses Hindernis passiert werden kann. Es ist einzig und allein möglich, einen Sicherheitshalt durchzuführen und den Routenzug zu stoppen. Dadurch ergeben sich im Betrieb des Routenzuges erhebliche Einschränkungen, eine Verringerung der Umschlagleistung sowie eine verminderte Flexibilität der Einsetzbarkeit des Routenzuges.

Aus der DE 10 2011 085 019 A1 ist ein autonomes Fahrzeug bekannt, das halb unter dem Anhängefahrzeug befindlich dieses zieht. Dabei erfasst ein Laserscanner auch Elemente des Anhängers.

Es ist daher Aufgabe der vorliegenden Erfindung, einen Routenzug sowie ein Steuerungsverfahren für einen Routenzug zur Verfügung zu stellen, die die oben genannten Nachteile vermeiden und eine flexiblere sowie genauere Steuerung des Routenzuges mit einer höheren Umschlagsleistung und besseren Flexibilität des Einsatzes des Routenzuges ermöglichen.

Diese Aufgabe wird durch einen Routenzug mit den Merkmalen des unabhängigen Patentanspruchs 1 sowie durch ein Steuerungsverfahren für einen Routenzug mit den Merkmalen des Patentanspruchs 8 gelöst. Vorteilhafte Weiterbildungen der Erfindung sind in den Unteransprüchen angegeben.

Die Aufgabe wird erfindungsgemäß dadurch gelöst, dass bei einem Routenzug bestehend aus einem Schlepper und mindestens einem Anhänger als Fahrzeuge des Routenzuges, wobei mindestens ein Fahrzeug des Routenzuges mindestens einen optischen Sensor aufweist, der Erfassungsbereich des optischen Sensors so ausgerichtet ist, dass er mindestens einen Teilbereich des Routenzuges sowie der Umgebung erfasst, wobei aus den Daten des optischen Sensors durch eine zugeordnete Recheneinheit eine oder mehrere der folgenden Informationen erfasst werden:
- Personen in einem Zwischenraum zwischen zwei Fahrzeugen des Routenzuges;
- die Anzahl der Anhänger:
- die Art der Anhänger;
- Abmessungen der Anhänger;
- eine eventuelle Ladung der Anhänger;
- Abmessungen einer eventuellen Ladung der Anhänger, insbesondere über Profilquerschnitte des Anhängers hinaus reichende Abmessungen;
- Anfahrziele des Routenzuges;

Eine solche Überwachung von Teilen des Routenzuges ermöglicht es, die Positionen der Anhänger in dem Routenzug bzw. von nachlaufenden Anhängern genau zu erfassen und somit auftretende Abweichungen zu erkennen. Zumeist sind bei Routenzügen die Anhänger so ausgelegt, dass diese spurtreu genau in der Spur des vorherlaufenden Anhängers nachlaufen. Abweichungen können somit erkannt werden. Auch ermöglicht diese Überwachung des eigentlichen Routenzuges und der nächsten Umgebung es, im Moment des Anfahrens des Routenzuges Personen zu erkennen die zwischen den Fahrzeugen, etwa zwischen zwei Anhängern stehen. Schließlich kann insgesamt die Steuerung des Routenzuges, insbesondere bei einem autonom ohne Fahrer fahrenden Routenzug, verbessert werden, wenn die tatsächlichen, genauen Positionen der Anhänger erfasst werden können. Indem auch die Umgebung erfasst wird, ist es möglich, seitliche Hindernisse zu erkennen und gegebenenfalls durch eine Fahrzeugsteuerung z.B. bei einer Kurvenfahrt auszuweichen, etwa indem ein größerer Radius gewählt wird, so dass nicht der letzte Anhänger des Routenzuges auf das Hindernis gezogen wird. Vor allem jedoch ist es möglich, die Sicherheitsbereiche vorteilhaft zu verkleinern, da nicht von der ungünstigsten Position der Anhänger des Routenzuges in Bezug auf das Hindernis ausgegangen werden muss, sondern die tatsächliche Ist-Position erfasst wird. Jede dieser Informationen kann durch im Stand Technik umfassend bekannte Erkennungsverfahren gewonnen werden, wie Clustering und Objektmatching-Verfahren, etwa ICP oder MCL-Verfahren. Mit diesem Verfahren lassen sich Konturen von Gegenständen wie auch beliebiger Körper erkennen und dadurch diese identifizieren. Insbesondere ist eine flexible Anpassung einer Fahrzeugsteuerung des Schleppers möglich, wenn die Anzahl der Anhänger sowie deren Art, deren Abmessungen und eventuell Beladung erfasst wird. Dadurch wird ein sehr viel flexiblerer Einsatz der Routenzüge möglich.

Es kann jede der genannten Informationen einzelnen oder in beliebiger Kombination mit den anderen aufgezählten Informationen gewonnen werden. Durch diese gewonnenen Informationen ist es möglich, eine Fahrzeugsteuerung des Schleppers zu beeinflussen bzw. die Steueralgorithmen des Schleppers anzupassen. Dies gilt insbesondere für automatisch fahrende autonome Schlepper eines autonomen Routenzuges.

Vorteilhaft weist der Schlepper den optischen Sensor auf.

Der Schlepper als ziehendes Fahrzeug weist oftmals bereits entsprechende optische Sensoren, wie etwa Laserscanner auf, die aus Sicherheitsgründen den Umgebungsraum auf Hindernisse überwachen. Wenn diese entsprechend ergänzt werden durch zusätzliche optische Sensoren, oder die vorhandenen optischen Sensoren in ihrem Erfassungsbereich so erweitert werden können, dass der nachfolgende Routenzug oder Teile des Routenzuges erfasst werden, so lässt sich die Erfindung kostengünstig und vorteilhaft einfach umzusetzen. Insbesondere bei einem autonomen fahrenden Schlepper für einen autonomen Routenzug bestehen schon zum guten Teil die notwendigen Einrichtungen des Schleppers und müssen nur ergänzt werden.

In einer günstigen Weiterbildung des Routenzuges erfasst der optische Sensor des Schleppers nach rückwärts gerichtet alle Anhänger.

Durch eine solche Anordnung eines optischen Sensors, beispielsweise eines Kamerasystems, aber auch eines dreidimensional oder zweidimensional erfassenden Laserscanners, lässt sich der gesamte verbleibende Routenzug bestimmen, insbesondere dessen relative Position und Stellung gegenüber dem Schlepper. Dies ermöglicht beispielsweise eine Kontrolle, ob die im Optimalfall spurtreu dem Schlepper nachlaufenden Anhänger von dieser optimalen Lauflinie abgewichen sind. Dies kann sich ergeben aufgrund von Kurvenfahrten, der Verteilung von beladenen Anhängern zu leeren Anhängern und sich daraus ergebende radialen Zugkräften bei Kurvenfahrt und der Aufsummierung von kleinen Abweichungsfehlern über die Länge des Routenzuges von Anhänger zu Anhänger.

Vorteilhaft weist der optische Sensor einen zweidimensionalen Laserscanner und/oder eine Stereokamera und/oder eine Kamera mit Laufzeitmessung auf.

Diese Systeme stehen umfangreich und kostengünstig zur Verfügung, um zweidimensionale oder dreidimensionale Aufnahmen zu erstellen. Ein zweidimensionaler Laserscanner kann dabei zum Beispiel in einer Ebene scannen und zugleich den Abstand zu Gegenständen erfassen. Ein solcher zweidimensionaler Laserscanner ist einfacher und kostengünstiger als ein dreidimensional erfassender Laserscanner, der einen gesamten Raumbereich erfasst. Der Einsatz eines solchen dreidimensionalen Laserscanner bei dem Routenzug ist natürlich auch möglich und ergibt mehr Informationen.

Es können mehrere Fahrzeuge einen optischen Sensor aufweisen.

In einer vorteilhaften weiteren Gestaltung des Routenzuges werden aus den Daten des optischen Sensors durch eine zugeordnete Recheneinheit eine oder mehrere der folgenden Informationen erfasst:
- Hindernisse in der Umgebung des Routenzuges;
- die relative Position der Anhänger;
- Anfahrziele des Routenzuges;

Jede dieser Informationen kann durch im Stand Technik umfassend bekannte Erkennungsverfahren gewonnen werden, wie Clustering und Objektmatching-Verfahren, etwa ICP oder MCL-Verfahren. Mit diesem Verfahren lassen sich Konturen der Fahrbahnoberfläche wie auch beliebiger Körper erkennen und dadurch diese identifizieren.

Es kann jede der genannten Informationen einzelnen oder in beliebiger Kombination mit den anderen aufgezählten Informationen gewonnen werden. Durch diese gewonnenen Informationen ist es möglich, eine Fahrzeugsteuerung des Schleppers zu beeinflussen bzw. die Steueralgorithmen des Schleppers anzupassen. Dies gilt insbesondere für automatisch fahrende autonome Schlepper eines autonomen Routenzuges.

Vorteilhaft ist der Schlepper ein autonom fahrender Schlepper.

Bei autonom fahrenden Routenzügen wirkt sich die Überwachung der Umgebung und Erkennung der Position der einzelnen Anhänger des Routenzuges besonders vorteilhaft aus, da kein Fahrer nachregulierend oder steuernd eingreifen kann. Es müssen dann weniger Sicherheitsräume eingehalten werden und kann der autonom fahrende Routenzug flexibler eingesetzt werden. Auch kommt es weniger schnell zu einem Ausfall. Beispielsweise führen Problemfälle, wie etwa ein unvorhergesehenes Hindernis seitlich in einem Fahrweg, das jedoch noch passiert werden kann, nicht zu einem automatischen Nothalt oder gar zu einer Kollision, da die Fahrzeugsteuerung aufgrund der Informationen des optischen Sensors ausweichen und insbesondere auch den genauen Fahrweg der dem Schlepper nachlaufenden Anhänger bestimmen kann.

Die Aufgabe wird auch gelöst durch ein Steuerungsverfahren zur Steuerung eines Routenzuges wir zuvor beschrieben wurde, bei dem abhängig von den erfassten Bildinformationen des optischen Sensors eine Fahrzeugsteuerung des Schleppers beeinflusst wird.

Das Steuerungsverfahren weist die bereits zuvor geschilderten Vorteile auf.

Bei der Vorbeifahrt des Routenzuges an einem erkannten Hindernis in geringem seitlichem Abstand kann die Fahrgeschwindigkeit von der Fahrzeugsteuerung verringert wird.

Vorteilhaft kann bei einer Kurvenfahrt des Routenzuges die Fahrgeschwindigkeit von der Fahrzeugsteuerung verringert werden, bis der letzte Anhänger die Kurvenbahn verlassen hat.

Durch die tatsächliche Erfassung der Zeitdauer, wie lange der Routenzug sich in der Kurvenfahrt befindet, kann der Zeitraum der langsamen Fahrt auf das tatsächlich notwendige Maß verringert werden.

Es ist möglich, dass bei einer Fahrbewegung alle Objekte erfasst werden, die sich mitbewegen und als zugehörig zum Routenzug bewertet werden.

Dadurch wird eine flexible Anpassung und Kontrolle möglich, wie viele Anhänger in dem Routenzug sich befinden. Durch die Erfassung während einer Bewegung wird die Erkennung der Anhänger vereinfacht.

Vorteilhaft wird bei einer in einem Zwischenraum zweier Fahrzeuge erkannten Person oder einem in dem Zwischenraum zweier Fahrzeuge erkannten Hindernis ein Anfahren des Routenzuges von der Fahrzeugsteuerung blockiert.

Hierdurch lassen sich die Sicherheitsanforderungen erfüllen und Ausfallzeiten durch Unfälle verringern.

Es kann bei einer in einem Zwischenraum zweier Fahrzeuge erkannten Person oder einem in dem Zwischenraum zweier Fahrzeuge erkannten Hindernis bei fahrendem Routenzug ein Nothalt erfolgen.

Beispielsweise kann durch das vorgeschlagene Verfahren aufgrund der Bilderkennung sehr früh und rasch erkannt werden, wenn eine Person in einen fahrenden Routenzug hineinläuft und die Gefahr besteht, dass diese in den Zwischenraum gelangt. In einem solchen Fall kann ein Lot halt ausgelöst werden.

Vorteilhaft kann zur Anfahrt eines Zieles des Routenzuges fortlaufend die Position der Anhänger bestimmt werden und anhand der Ist-Position der Anhänger der Fahrweg des Schleppers korrigiert werden.

Das Anfahrziel kann eine seitliche Haltelinie sein, auf der eine seitliche Begrenzungslinie des Routenzuges zum Stehen kommen soll.

Ein Routenzug muss oftmals so abgestellt werden, dass dessen eine Seitenkante in einer Linie auf einer festgelegten Haltelinie steht. Nur dann kann ein Be- und Entladen optimal erfolgen. Dies ist durch das beschriebene Verfahren möglich, da durch Korrekturen der Fahrzeugsteuerung der gesamte Routenzug optimal sowohl in Bezug auf die Richtung als auch den seitlichen Abstand auf diese Haltelinie ausgerichtet werden kann, während diese angefahren wird. Zusätzlich kann noch das Anhalten in der richtigen Position in Bezug auf die Längserstreckung sichergestellt werden.

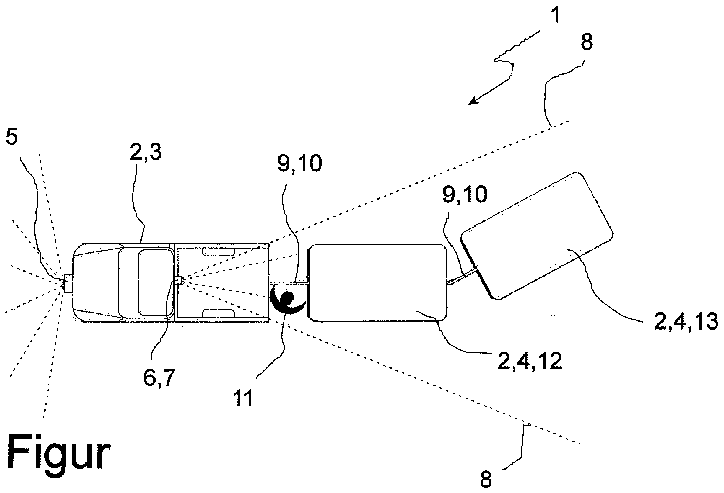

Weitere Vorteile und Einzelheiten der Erfindung werden anhand des in der schematischen Figur dargestellten Ausführungsbeispiels näher erläutert. Hierbei zeigt die Figur einen erfindungsgemäßen Routenzug 1 in Aufsicht. Fahrzeuge 2, aus denen der Routenzug 1 gebildet ist, sind ein Schlepper 3 sowie im vorliegenden Beispiel zwei Anhänger 4. Der Schlepper 3 weist an seiner Frontseite einen zusätzlichen Laserscanner 5 auf, der für die Erfindung nicht erforderlich ist und mit dem der Raum vor dem im vorliegenden Fall beispielsweise autonom fahrenden Schlepper 3 auf Hindernisse wie etwa Personen überwacht werden kann. Zusätzlich weist der Schlepper 3 einen optischen Sensor 6 auf, der als dreidimensional erfassende Kamera 7 ausgebildet ist und dessen Erfassungsbereich 8 so ausgerichtet ist, dass der gesamte verbleibende Routenzug 1 hinter dem Schlepper 3 erfasst wird.

Die zwei Anhänger 4 weisen jeweils eine Zugvorrichtung 9 bestehend aus einer Zugdeichsel 10 und einer nicht näher dargestellten Anhängerkupplung auf. Die Anhängerkupplung kann dabei in verschiedenen Ausführungen, die nach dem Stand der Technik bekannt sind, gestaltet sein, wie Kugelkopf, Zugbolzen für Zugösen und Zughaken.

Auf den Anhängern 4 werden Waren transportiert. Wenn die Anhänger 4 durch Personen 11 be- oder entladen werden und nach Beendigung dieser Tätigkeit sich noch eine Person 11 in einem Zwischenraum im vorliegenden Fall zwischen dem Schlepper 3 als vorausfahrenden Fahrzeug und einem ersten Anhänger 12 befindet, so wird dies durch eine nicht dargestellte Recheneinheit erfasst, die Signaldaten des optischen Sensors 6 auswertet und mithilfe von zum Beispiel Bildverarbeitungsmethoden eine Person in diesem Zwischenraum erkennt. Ein Anfahren des Routenzuges 1 wird dann verhindert.

Ebenso kann durch die Recheneinheit erfasst werden, dass ein letzter Anhänger 13 sich noch in einer Kurvenfahrtstellung befindet und entsprechend eine Fahrgeschwindigkeit verringert werden. Ebenso ist es möglich, die Art der Anhänger 4 und deren Anzahl durch die Recheneinheit zu erfassen.

Weiterhin kann über eine Erfassung der tatsächlichen Position der Anhänger 4 eine Fahrzeugsteuerung des Schleppers 3 Korrekturen vornehmen und beispielsweise durch Kurvenfahrtbewegungen den Routenzug 1 so ausrichten , dass eine seitliche Haltelinie für den Rand des Routenzuges 1 beim Anfahren einer Übergabestation als Anfahrtziel eingehalten wird. An einer solchen Übergabestation kann dann das Be- und Entladen des Routenzuges erfolgen.

## Patentansprüche

1. Routenzug bestehend aus einem Schlepper (3) und mindestens einem Anhänger (4) als Fahrzeuge (2) des Routenzuges (1), wobei mindestens ein Fahrzeug (2) des Routenzuges mindestens einen optischen Sensor (6) aufweist und der Erfassungsbereich des optischen Sensors (6) so ausgerichtet ist, dass er mindestens einen Teilbereich des Routenzuges (1) sowie der Umgebung erfasst,
**dadurch gekennzeichnet,**
**dass** aus den Daten des optischen Sensors (6) durch eine zugeordnete Recheneinheit eine oder mehrere der folgenden Informationen erfasst werden:
- Personen (11) in einem Zwischenraum zwischen zwei Fahrzeugen (2) des Routenzuges (1);
- die Anzahl der Anhänger (4):
- die Art der Anhänger (4);
- Abmessungen der Anhänger (4);
- eine eventuelle Ladung der Anhänger (4);
- Abmessungen einer eventuellen Ladung der Anhänger (4), insbesondere über Profilquerschnitte des Anhängers (4) hinaus reichende Abmessungen;
- Anfahrziele des Routenzuges (1).

2. Routenzug nach Anspruch 1,
**dadurch gekennzeichnet,**
**dass** der Schlepper (3) den optischen Sensor (6) aufweist.

3. Routenzug nach Anspruch 2,
**dadurch gekennzeichnet,**
**dass** der optische Sensor (6) des Schleppers (3) nach rückwärts gerichtet alle Anhänger (4) erfasst.

4. Routenzug nach einem der Ansprüche 1 bis 3,
**dadurch gekennzeichnet,**
**dass** der optische Sensor (6) einen zweidimensionalen Laserscanner und/oder eine Stereokamera und/oder eine Kamera (7) mit Laufzeitmessung aufweist.

5. Routenzug nach einem der Ansprüche 1 bis 4,
**dadurch gekennzeichnet,**
**dass** mehrere Fahrzeuge (2) einen optischen Sensor (6) aufweisen.

6. Routenzug nach einem der Ansprüche 1 bis 5,
**dadurch gekennzeichnet,**
**dass** aus den Daten des optischen Sensors (6) durch eine zugeordnete Recheneinheit eine oder mehrere der folgenden Informationen erfasst werden:
- Hindernisse in der Umgebung des Routenzuges (1);
- die relative Position der Anhänger (4);
- freie Fahrbahnbereiche in der Umgebung.

7. Routenzug nach einem der Ansprüche 1 bis 6,
**dadurch gekennzeichnet,**
**dass** der Schlepper (3) ein autonom fahrender Schlepper (3) ist.

8. Steuerungsverfahren zur Steuerung eines Routenzuges entsprechend einem der vorhergehenden Ansprüche,
**dadurch gekennzeichnet,**
**dass** abhängig von den erfassten Bildinformationen des optischen Sensors (6) eine Fahrzeugsteuerung des Schleppers (3) beeinflusst wird.

9. Steuerungsverfahren nach Anspruch 8,
**dadurch gekennzeichnet,**
**dass** bei der Vorbeifahrt des Routenzuges (1) an einem erkannten Hindernis in geringem seitlichem Abstand die Fahrgeschwindigkeit von der Fahrzeugsteuerung verringert wird.

10. Steuerungsverfahren nach Anspruch 8 oder 9,
**dadurch gekennzeichnet,**
**dass** bei einer Kurvenfahrt des Routenzuges (1) die Fahrgeschwindigkeit von der Fahrzeugsteuerung verringert wird, bis der letzte Anhänger (13) die Kurvenbahn verlassen hat.

11. Steuerungsverfahren nach einem der Ansprüche 8 bis 10,
**dadurch gekennzeichnet,**
**dass** bei einer Fahrbewegung alle Objekte erfasst werden, die sich mitbewegen und als zugehörig zum Routenzug bewertet werden.

12. Steuerungsverfahren nach einem der Ansprüche 8 bis 11,
**dadurch gekennzeichnet,**
**dass** bei einer in einem Zwischenraum zweier Fahrzeuge (2) erkannten Person (11) oder einem in dem Zwischenraum zweier Fahrzeuge(2) erkannten Hindernis ein Anfahren des Routenzuges (1) von der Fahrzeugsteuerung blockiert wird.

13. Steuerungsverfahren nach einem der Ansprüche 8 bis 11,
**dadurch gekennzeichnet,**
**dass** bei einer in einem Zwischenraum zweier Fahrzeuge (2) erkannten Person (11) oder einem in dem Zwischenraum zweier Fahrzeuge (2) erkannten Hindernis bei fahrendem Routenzug (1) ein Nothalt erfolgt.

14. Steuerungsverfahren nach einem der Ansprüche 8 bis 13,
**dadurch gekennzeichnet,**
**dass** zur Anfahrt eines Zieles des Routenzuges (1) fortlaufend die Position der Anhänger (4) bestimmt wird und anhand der Ist-Position der Anhänger (4) der Fahrweg des Schleppers (3) korrigiert wird.

15. Steuerungsverfahren nach Anspruch 14,
**dadurch gekennzeichnet,**
**dass** das Anfahrziel eine seitliche Haltelinie ist, auf der eine seitliche Begrenzungslinie des Routenzuges (1) zum Stehen kommen soll.

## Claims

1. Tugger train comprising a tractor (3) and at least one trailer (4) as vehicles (2) of the tugger train (1), at least one vehicle (2) of the tugger train having at least one optical sensor (6), and the detection range of the optical sensor (6) being oriented such that it registers at least a sub-area of the tugger train (1) and the environment,
**characterized in that**
from the data from the optical sensor (6), one or more of the following items of information are acquired by an associated computing unit:
- persons (11) in an interspace between two vehicles (2) of the tugger train (1);
- the number of trailers (4);
- the type of trailers (4);
- dimensions of the trailers (4);
- a possible load of the trailers (4);
- dimensions of a possible load of the trailers (4), in particular dimensions reaching beyond profile cross sections of the trailer (4);
- destinations of the tugger train (1).

2. Tugger train according to Claim 1,
**characterized in that**
the tractor (3) has the optical sensor (6).

3. Tugger train according to Claim 2,
**characterized in that**
the optical sensor (6) of the tractor (3), aimed rearwards, registers all the trailers (4).

4. Tugger train according to one of Claims 1 to 3,
**characterized in that**
the optical sensor (6) has a two-dimensional laser scanner and/or a stereo camera and/or a camera (7) with propagation time measurement.

5. Tugger train according to one of Claims 1 to 4,
**characterized in that**
a plurality of vehicles (2) have an optical sensor (6).

6. Tugger train according to one of Claims 1 to 5,
**characterized in that**
from the data from the optical sensor (6), one or more of the following items of information are acquired by an associated computing unit:
- obstacles in the environment of the tugger train (1);
- the relative position of the trailers (4);
- free roadway areas in the environment.

7. Tugger train according to one of Claims 1 to 6,
**characterized in that**
the tractor (3) is a self-driving tractor (3).

8. Control method for controlling a tugger train corresponding to one of the preceding claims,
**characterized in that**
depending on the image information acquired from the optical sensor (6), a vehicle control system of the tractor (3) is influenced.

9. Control method according to Claim 8,
**characterized in that**
if the tugger train (1) travels past a detected obstacle at a small lateral distance, the speed of travel is reduced by the vehicle control system.

10. Control method according to Claim 8 or 9,
**characterized in that**
when the tugger train (1) is travelling round a curve, the speed of travel is reduced by the vehicle control system until the last trailer (13) has left the curve.

11. Control method according to one of Claims 8 to 10,
**characterized in that**
during a travel movement, all objects which move as well and are assessed as belonging to the tugger train are registered.

12. Control method according to one of Claims 8 to 11,
**characterized in that**
if a person (11) is detected in an interspace between two vehicles (2), or an obstacle is detected in the interspace between two vehicles (2), starting of the tugger train (1) is blocked by the vehicle control system.

13. Control method according to one of Claims 8 to 11,
**characterized in that**
if a person (11) is detected in an interspace between two vehicles (2), or an obstacle is detected in the interspace between two vehicles (2) when the tugger train (1) is travelling, an emergency stop is carried out.

14. Control method according to one of Claims 8 to 13,
**characterized in that**
in order to travel to a destination of the tugger train (1), the position of the trailers (4) is determined continuously and the route of the tractor (3) is corrected by using the current position of the trailers (4).

15. Control method according to Claim 14,
**characterized in that**
the destination is a lateral stop line, on which a lateral boundary line of the tugger train (1) is intended to stop.

## Revendications

1. Train routier composé d'un tracteur (3) et d'au moins une remorque (4) en tant que véhicules (2) du train routier (1), au moins un véhicule (2) du train routier comportant au moins un capteur optique (6) et la zone de détection du capteur optique (6) étant orientée de sorte à détecter au moins une zone partielle du train routier (1), ainsi que de l'environnement,
**caractérisé en ce**
**qu'**à partir des données du capteur optique (6), une unité de calcul associée enregistre une ou plusieurs des informations suivantes :
- les personnes (11) dans une espace intermédiaire entre deux véhicules (2) du train routier (1) ;
- le nombre de remorques (4) ;
- le type des remorques (4) ;
- les dimensions des remorques (4) ;
- un éventuel chargement des remorques (4) ;
- les dimensions d'un éventuel chargement des remorques (4), notamment les dimensions hors tout sur des sections transversales du profil de lad remorque (4) ;
- les destinations du train routier (1).

2. Train routier selon la revendication 1,
**caractérisé en ce que**
le tracteur (3) comporte le capteur optique (6).

3. Train routier selon la revendication 2,
**caractérisé en ce que**
le capteur optique (6) du tracteur (3) détecte toutes les remorques (4) en orientation arrière.

4. Train routier selon l'une quelconque des revendications 1 à 3,
**caractérisé en ce que**
le capteur optique (6) comporte un scanner au laser bidimensionnel et/ou une caméra stéréo et/ou une caméra (7) avec mesure du temps de fonctionnement.

5. Train routier selon l'une quelconque des revendications 1 à 4,
**caractérisé en ce que**
plusieurs véhicules (2) comportent un capteur optique (6).

6. Train routier selon l'une quelconque des revendications 1 à 5,
**caractérisé en ce**
**qu'**à partir des données du capteur optique (6), une unité de calcul associée enregistre une ou plusieurs des informations suivantes :
- des obstacles dans l'environnement du train routier (1) ;
- la position relative de la remorque (4) ;
- des zones libres de la voie de circulation dans l'environnement.

7. Train routier selon l'une quelconque des revendications 1 à 6,
**caractérisé en ce que**
le tracteur (3) est un tracteur (3) roulant de manière autonome.

8. Procédé de commande destiné à commander un train routier correspondant à l'une quelconque des revendications précédentes,
**caractérisé en ce**
**qu'**en fonction des informations d'images détectées par le capteur optique (6), une commande du véhicule tracteur (3) est influencée.

9. Procédé de commande selon la revendication 8,
**caractérisé en ce que**
lorsque le train routier (1) passe devant un obstacle identifié à un faible écart latéral, la vitesse de déplacement est réduite par la commande du véhicule.

10. Procédé de commande selon la revendication 8 ou 9,
**caractérisé en ce que**
lorsque le train routier (1) roule dans un virage, la vitesse de déplacement est réduite par la commande du véhicule jusqu'à ce que la dernière remorque (13) ait quitté le virage.

11. Procédé de commande selon l'une quelconque des revendications 8 à 10,
**caractérisé en ce que**
lors d'un mouvement en déplacement, tous les objets qui se déplacent également et qui sont estimés comme faisant partie du train routier sont détectés.

12. Procédé de commande selon l'une quelconque des revendications 8 à 11,
**caractérisé en ce que**
lorsqu'une personne (11) est identifiée dans un espace intermédiaire entre deux véhicules (2), ou un obstacle est identifié dans un espace intermédiaire entre deux véhicules (2), un démarrage du train routier (1) est bloqué par la commande du véhicule.

13. Procédé de commande selon l'une quelconque des revendications 8 à 11,
**caractérisé en ce que**
lorsqu'une personne (11) est identifiée dans un espace intermédiaire entre deux véhicules (2), ou un obstacle est identifié dans un espace intermédiaire entre deux véhicules (2) lorsque le train routier (1) roule, un arrêt d'urgence a lieu.

14. Procédé de commande selon l'une quelconque des revendications 8 à 13,
**caractérisé en ce que**
pour atteindre une destination du train routier (1), la position des remorques (4) est constamment déterminée et à l'aide de la position réelle des remorques (4), l'itinéraire du tracteur (3) est corrigé.

15. Procédé de commande selon la revendication 14,
**caractérisé en ce que**
la destination est une ligne d'arrêt latérale, sur laquelle une ligne de délimitation latérale du train routier (1) doit s'arrêter.
